# EUROPEAN PATENT APPLICATION

(11) **EP 4 369 811 A1**
(43) Date of publication of application: **15.05.2024**
(21) Application number: 21948795.6
(22) Date of filing: 07.07.2021
(51) Int. Cl.: H04W 72/00, H04L 5/00, H04L 1/00

(54) **RANDOM ACCESS METHOD AND APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2021/105030
(87) International publication number: WO 2023/279297

(57) **Abstract**

The present disclosure relates to a random access method and apparatus, and a storage medium. The random access method applied to a terminal comprises: in response to a terminal being configured with a first initial bandwidth part (BWP) and a second initial BWP, determining first information, the first information being used to indicate SSB information that has a mapping relationship with second random access resource information configured in the second initial BWP (S11); and performing random access on the basis of the first information (S12). In the present disclosure, a random access resource corresponding to when random access is performed on a second initial BWP is directly determined, thereby improving communication efficiency.

## Description

### FIELD

The present disclosure relates to the field of communication technologies, and more particularly to a random access method, a random access apparatus, and a storage medium.

### BACKGROUND

With the continuous development of Internet of Things services, for example, video surveillance, smart home, wearable devices and industrial sensor monitoring, and other services are popular. These services usually require a rate of tens to 100M, and also have relatively high requirements for latency. Therefore, in related technologies, a machine type communication (MTC) and a narrow band Internet of thing (NB-IoT) technology are difficult to meet the requirements. Therefore, it is proposed to design a new type of terminal in 5G new radio (NR) to cover mid-end IoT devices. In the current 3GPP standardization, this new type of terminal is referred to as a reduced capability user equipment (UE), or abbreviated as a NR-lite or a Redcap terminal.

With the introduction of the Redcap terminal, capabilities of the terminals are differentiated. For example, the Redcap terminal has a limited transceiving bandwidth relative to a normal terminal (normal UE). Therefore, a differentiated bandwidth configuration is needed for the Redcap terminal. For a Redcap terminal configured with a differentiated bandwidth, how to configure random access resources is a subject that needs to be studied.

### SUMMARY

In order to overcome the problems existing in related technologies, the present disclosure provides a random access method, a random access apparatus, and a storage medium.

According to a first aspect of embodiments of the present disclosure, there is provided a random access method, which is applied to a terminal. The random access method includes determining first information, in response to the terminal being configured with a first initial bandwidth part and a second initial bandwidth part, in which the first information is configured to indicate that synchronous signal block (SSB) information has a mapping relationship with second random access resource information configured in the second initial bandwidth part, and performing random access based on the first information.

In an implementation, the first information is configured to indicate that the second random access resource information has a mapping relationship with first SSB information, and the first SSB information is SSB information configured in the first initial bandwidth part. Performing the random access based on the first information includes monitoring the first SSB information in the first initial bandwidth part, determining the second random access resource information according to monitored first SSB information, and performing the random access based on the second random access resource information.

In an implementation, the first information is configured to indicate that a second common control resource set in a second random access resource has a mapping relationship with the first SSB information. Determining the second random access resource information according to the monitored first SSB information includes determining spatial beam information of a first SSB according to the monitored first SSB information, and taking the spatial beam information of the first SSB as spatial beam information of the second common control resource set.

In an implementation, the first information is configured to indicate that a second physical random access channel (PRACH) resource set in a second random access resource has a mapping relationship with the first SSB information. Determining the second random access resource information according to the monitored first SSB information includes determining time-frequency domain information of a first PRACH resource set according to the monitored first SSB information, and taking the time-frequency domain information of the first PRACH resource as time-frequency domain information of the second PRACH resource set.

In an implementation, the first information is configured to indicate that a second common control resource set in a second random access resource has a mapping relationship with first SSB information, and a second physical random access channel (PRACH) resource set in the second random access resource has a mapping relationship with second SSB information. The first SSB information is SSB information configured in the first initial bandwidth part, and the second SSB information is SSB information configured in the second initial bandwidth part.

In an implementation, the first information is configured to indicate that the second random access resource information has a mapping relationship with second SSB information, and the second SSB information is SSB information configured in the second initial bandwidth part. Performing the random access based on the first information includes monitoring the second SSB information, in response to meeting a monitoring condition for monitoring a second SSB, determining the second random access resource information according to monitored second SSB information, and performing the random access based on the second random access resource information.

In an implementation, the monitoring condition includes at least one of a time condition for monitoring the second SSB information, a mapping relationship condition between a first SSB and the second SSB.

In an implementation, the monitoring condition is determined in one or a combination of the following ways: determining in a predefined way, determining based on a notification message carried in the first SSB information. The notification message is configured to indicate the monitoring condition.

According to a second aspect of embodiments of the present disclosure, there is provided a random access method, which is applied to a network device. The random access method includes configuring a first initial bandwidth part and a second initial bandwidth part, and sending first information. The first information is configured to indicate that synchronous signal block (SSB) information has a mapping relationship with second random access resource information configured in the second initial bandwidth part.

In an implementation, the first information is configured to indicate that the second random access resource information has a mapping relationship with first SSB information, and the first SSB information is SSB information configured in the first initial bandwidth part.

In an implementation, the first information is configured to indicate that a second common control resource set in a second random access resource has a mapping relationship with the first SSB information.

In an implementation, the first information is configured to indicate that a second physical random access channel (PRACH) resource set in a second random access resource has a mapping relationship with the first SSB information.

In an implementation, the first information is configured to indicate that a second common control resource set in a second random access resource has a mapping relationship with first SSB information. The first information is configured to indicate that a second physical random access channel (PRACH) resource set in the second random access resource has a mapping relationship with second SSB information. The first SSB information is SSB information configured in the first initial bandwidth part, and the second SSB information is SSB information configured in the second initial bandwidth part.

In an implementation, the first information is configured to indicate that the second random access resource information has a mapping relationship with second SSB information, and the second SSB information is SSB information configured in the second initial bandwidth part.

In an implementation, the method further includes carrying a notification message in the first SSB information. The notification message is configured to indicate a monitoring condition for monitoring a second SSB.

In an implementation, the monitoring condition includes at least one of a time condition for monitoring the second SSB information, a mapping relationship condition between a first SSB and the second SSB.

According to a third aspect of embodiments of the present disclosure, there is provided a random access apparatus, which is applied to a terminal. The random access apparatus includes a processing unit configured to determine first information, in response to determining that the terminal is configured with a first initial bandwidth part and a second initial bandwidth part, in which the first information is configured to indicate that synchronous signal block (SSB) information has a mapping relationship with second random access resource information configured in the second initial bandwidth part, and a communication unit configured to perform random access based on the first information.

In an implementation, the first information is configured to indicate that the second random access resource information has a mapping relationship with first SSB information, and the first SSB information is SSB information configured in the first initial bandwidth part. The communication unit monitors the first SSB information in the first initial bandwidth part, determines the second random access resource information according to monitored first SSB information, and performs the random access based on the second random access resource information.

In an implementation, the first information is configured to indicate that a second common control resource set in a second random access resource has a mapping relationship with the first SSB information. The communication unit determines spatial beam information of a first SSB according to the monitored first SSB information, and takes the spatial beam information of the first SSB as spatial beam information of the second common control resource set.

In an implementation, the first information is configured to indicate that a second physical random access channel (PRACH) resource set in a second random access resource has a mapping relationship with the first SSB information. The communication unit determines time-frequency domain information of a first PRACH resource set according to the monitored first SSB information, and takes the time-frequency domain information of the first PRACH resource as time-frequency domain information of the second PRACH resource set.

In an implementation, the first information is configured to indicate that a second common control resource set in a second random access resource has a mapping relationship with first SSB information, and a second physical random access channel (PRACH) resource set in the second random access resource has a mapping relationship with second SSB information. The first SSB information is SSB information configured in the first initial bandwidth part, and the second SSB information is SSB information configured in the second initial bandwidth part.

In an implementation, the first information is configured to indicate that the second random access resource information has a mapping relationship with second SSB information, and the second SSB information is SSB information configured in the second initial bandwidth part. The communication unit monitors the second SSB information, in response to meeting a monitoring condition for monitoring a second SSB, determines the second random access resource information according to monitored second SSB information, and performs the random access based on the second random access resource information.

In an implementation, the monitoring condition includes at least one of a time condition for monitoring the second SSB information, a mapping relationship condition between a first SSB and the second SSB.

In an implementation, the monitoring condition is determined in one or a combination of the following ways: determining in a predefined way, determining based on a notification message carried in the first SSB information. The notification message is configured to indicate the monitoring condition.

According to a fourth aspect of embodiments of the present disclosure, there is provided a random access apparatus, which is applied to a network device. The random access apparatus includes a processing unit configured to configure a first initial bandwidth part and a second initial bandwidth part, and a sending unit configured to send first information. The first information is configured to indicate that synchronous signal block (SSB) information has a mapping relationship with second random access resource information configured in the second initial bandwidth part.

In an implementation, the first information is configured to indicate that the second random access resource information has a mapping relationship with first SSB information, and the first SSB information is SSB information configured in the first initial bandwidth part.

In an implementation, the first information is configured to indicate that a second common control resource set in a second random access resource has a mapping relationship with the first SSB information.

In an implementation, the first information is configured to indicate that a second physical random access channel (PRACH) resource set in a second random access resource has a mapping relationship with the first SSB information.

In an implementation, the first information is configured to indicate that a second common control resource set in a second random access resource has a mapping relationship with first SSB information. The first information is configured to indicate that a second physical random access channel (PRACH) resource set in the second random access resource has a mapping relationship with second SSB information. The first SSB information is SSB information configured in the first initial bandwidth part, and the second SSB information is SSB information configured in the second initial bandwidth part.

In an implementation, the first information is configured to indicate that the second random access resource information has a mapping relationship with second SSB information, and the second SSB information is SSB information configured in the second initial bandwidth part.

In an implementation, the sending unit is further configured to carry a notification message in the first SSB information. The notification message is configured to indicate a monitoring condition for monitoring a second SSB.

In an implementation, the monitoring condition includes at least one of a time condition for monitoring the second SSB information, a mapping relationship condition between a first SSB and the second SSB.

According to a fifth aspect of embodiments of the present disclosure, there is provided a random access device. The random access device includes a processor, and a memory for storing instructions executable by the processor. The processor is configured to perform the random access method described in the first aspect or any one of implementations of the first aspect.

According to a sixth aspect of embodiments of the present disclosure, there is provided a random access device. The random access device includes a processor, and a memory for storing instructions executable by the processor. The processor is configured to perform the random access method described in the second aspect or any one of implementations of the second aspect.

According to a seventh aspect of embodiments of the present disclosure, there is provided a storage medium. The storage medium has stored therein instructions that, when executed by a processor of a terminal, cause the terminal to perform the random access method described in the first aspect or any one of implementations of the first aspect.

According to an eighth aspect of embodiments of the present disclosure, there is provided a storage medium. The storage medium has stored therein instructions that, when executed by a processor of a terminal, cause the terminal to perform the random access method described in the second aspect or any one of implementations of the second aspect.

The technical solutions provided in the embodiments of the present disclosure may include the following advantageous effects. In case that the terminal is configured with the first initial bandwidth part (BWP) and the second initial BWP, the first information is determined. The first information is configured to indicate that the synchronous signal block (SSB) information has the mapping relationship with the second random access resource information configured in the second initial bandwidth part, so a SSB associated with the second random access resource information in the second initial BWP may be identified. The random access is performed based on the first information, and a random access resource corresponding to when performing the random access on the second initial BWP may be directly determined, thus improving communication efficiency.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram showing a wireless communication system according to an illustrative embodiment.
FIG. 2 is a schematic diagram showing a correspondence between a SSB and a PRACH according to an illustrative embodiment.
FIG. 3 is a protocol specification showing a mapping relationship between each SSB and a random access resource in a SSB burst according to an illustrative embodiment.
FIG. 4 is a flow chart showing a random access method according to an illustrative embodiment.
FIG. 5 is a flow chart showing a random access method according to an illustrative embodiment.
FIG. 6 is a flow chart showing a random access method according to an illustrative embodiment.
FIG. 7 is a flow chart showing a random access method according to an illustrative embodiment.
FIG. 8 is a flow chart showing a random access method according to an illustrative embodiment.
FIG. 9 is a block diagram showing a random access apparatus according to an illustrative embodiment.
FIG. 10 is a block diagram showing a random access apparatus according to an illustrative embodiment.
FIG. 11 is a block diagram showing a device for random access according to an illustrative embodiment.
FIG. 12 is a block diagram showing a device for random access according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

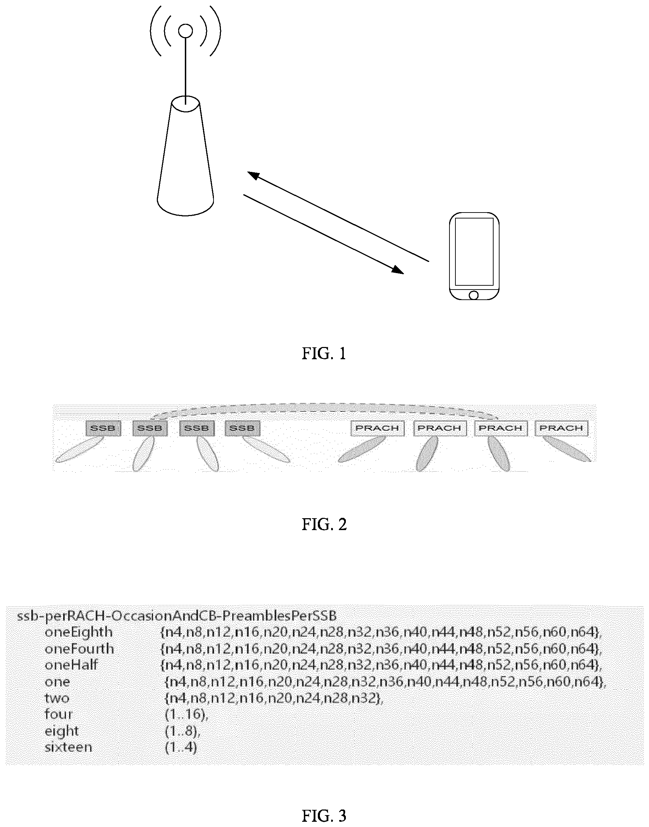

An access method provided in an embodiment of the present disclosure may be applied to a wireless communication system shown in FIG. 1. Referring to FIG. 1, the wireless communication system includes a terminal and a network device. Information is sent and received between the terminal and the network device through a wireless resource.

It may be understood that the wireless communication system shown in FIG. 1 is only for schematic illustration. The wireless communication system may also include other network devices, such as a core network device, a wireless relay device, and a wireless backhaul device, which are not shown in FIG. 1. An embodiment of the present disclosure does not limit the number of network devices and terminals included in the wireless communication system.

It may be further understood that the wireless communication system according to the embodiment of the present disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), carrier sense multiple access with collision avoidance. According to the capacity, speed, latency and other factors of different networks, the network may be divided into a 2nd generation (2G) network, a 3G network, a 4G network or a future evolution network, such as a 5G network, the 5G network may also be referred to as a new radio (NR). For convenience of description, the wireless communication network is sometimes referred to as a network in the present disclosure.

Further, the network device involved in the present disclosure may also be referred to as a wireless access network device. The wireless access network device may be a base station, an evolved node B, a home base station, an access point (AP) in a wireless fidelity (WIFI) system, a wireless relay A node, a wireless backhaul node, a transmission point (TP), a transmission and reception point (TRP), etc., and it may also be a gNB in an NR system, or it may also be a component or part of device that constitutes a base station. When it is a vehicle to everything (V2X) communication system, the network device may also be an in-vehicle device. It is to be understood that in the embodiment of the present disclosure, a specific technology and a specific device form adopted by the network device are not limited.

Further, the terminal involved in the present disclosure may also be referred to as a terminal device, a user equipment (UE), a mobile station (MS), a mobile terminal (MT), etc. It is a device that provides voice and/or data connectivity to a user. For example, the terminal may be a handheld device with a wireless connection function, an in-vehicle device, etc. At present, some examples of terminals are a mobile phone, a pocket personal computer (PPC), a palmtop computer, a personal digital assistant (PDA), a notebook computer, a tablet computer, a wearable device, or an in-vehicle device. In addition, when it is a vehicle to everything (V2X) communication system, the terminal device may also be an in-vehicle device. It is to be understood that a specific technology and a specific device adopted by the terminal are not limited in the embodiment of the present disclosure.

The terminal involved in the embodiments of the present disclosure may be understood as a new type of terminal designed in 5G new radio (NR). The new type of terminal is referred to as a reduced capability user equipment (UE), or abbreviated as a NR-lite. In the embodiment of the present disclosure, the new type of terminal is referred to as a Redcap terminal.

Similar to an Internet of Thing (IoT) device in long term evolution (LTE), the Redcap terminal usually needs to meet the following requirements:
- Low cost and complexity,
- Some degree of coverage enhancement,
- Power saving.

Since a current NR system is designed for a high-end terminal with high rate and low latency, etc., the current design cannot meet the above requirements of Redcap terminal. Therefore, the current NR system needs to be modified to meet the requirements of NR-lite. For example, in order to meet the requirements of low cost and complexity, a radio frequency (RF) bandwidth of NR-IoT may be limited, e.g. to 5M Hz or 10M Hz, or the buffer size of the NR-lite may be limited, thus limiting the size of a transport block received each time. For power saving, a possible optimization direction is to simplify a communication flow and reduce the number of times a NR-lite terminal detects a downlink control channel, etc.

In related technologies, a unified random access resource configuration manner is adopted for all types of terminals. For example, in a NR system, an access configuration of the terminal is performed through a common random access configuration information element (RACH-ConfigCommon information element). A first part in a RACH-ConfigCommon information element configuration is used to configure a total amount of random access resources in a cell. A configured random access resource includes a time domain resource, a frequency domain resource, and a random access preamble for performing random access. A second part in the RACH-ConfigCommon information element configuration is used to configure a mapping relationship between a physical broadcast synchronization broadcast signal block (synchronization signal and PBCH block, SSB) and a random access resource. For example, a mapping relationship between the SSB and the random access resource such as a common control resource set (common CORESET) and a physical random access channel (PRACH) resource is configured.

In a traditional LTE system, merely one synchronization channel and one broadcast channel are transmitted in one cycle. Since the concept of multi-beam is introduced into NR, the transmission of SSB is also based on a multi-beam transmission. That is, in one cycle, the SSB is transmitted with multiple beams. In one cycle, the SSB transmitted using different beams is referred to as a SSB burst. Each SSB in the SSB burst corresponds to a different subset of random access resources. For example, as shown in FIG. 2, there is a correspondence between the SSB and the PRACH. A mapping relationship between each SSB in the SSB burst and the random access resource is defined in a protocol. A protocol specification of the mapping relationship between each SSB in the SSB burst and the random access resource may refer to FIG. 3.

Referring to FIG. 3, ssb-per RACH-Occasion is used to configure a correspondence between the SSB and a RO, and indicates the number of SSBs corresponding to one RACH occasion. A value range of ssb-per RACH-Occasion is one eighth to sixteen. Different values of ssb-per RACH-Occasion represent different mapping relationships between the SSB and the RO. When ssb-per RACH-Occasion > 1, it means that multiple SSBs correspond to one RACH occasion. Further, referring to FIG. 2, a value of each ssb-per RACH-Occasion corresponds to a CB-PreamblesPerSSB set. A CB-PreamblesPerSSB is used to configure the number of contention-based random access preambles that each SSB may use in one RO. Different values of CB-PreamblesPerSSB represent the number of different preambles based on contention used by synchronous broadcast signal blocks.

In current R15 and R16 systems, there is a mapping relationship between the SSB and the PRACH. The terminal may first measure the SSB, and then determine the SSB that meets conditions. After determining the SSB, the terminal may determine a PRACH resource corresponding to a selected SSB to perform random access according to the mapping relationship between the SSB and the PRACH.

However, as mentioned above, there are multiple SSBs in one SSB burst, and different SSBs in the multiple SSBs use different beams for transmission. In addition, different SSBs have a corresponding CORESET#0, a common physical downlink control channel (common PDCCH), and a system information block (SIB) scheduled by the common PDCCH. The CORESET#0, the common PDCCH and a common PDSCH corresponding to a certain SSB have a same quasi co-location (QCL) relationship with the corresponding SSB.

In related technologies, due to a RedCap terminal bandwidth limitation, it is necessary to configure a special initial downlink bandwidth part (initial DL BWP) and/or an initial uplink bandwidth part (initial UL BWP) for the RedCap terminal. That is, two initial DL BWPs and/or two initial UL BWPs are configured for the RedCap terminal, one of which is an original common bandwidth part (BWP), hereinafter referred to as a first initial BWP, and the other is a BWP dedicated to the RedCap terminal, hereinafter referred to as a second initial BWP. The first initial BWP may include the first initial DL BWP and/or the first initial UL BWP. The second initial BWP may include a second initial DL BWP and/or a second initial UL BWP.

In related technologies, the first initial BWP and the second initial BWP are respectively configured with channel information transmitted on these BWPs, such as SSB information and a random access resource that has a mapping relationship with the SSB information, such as a common CORESET, and a PRACH resource, etc. However, the RedCap terminal uses a random access resource configured on the second initial BWP when performing random access, and the RedCap terminal may correspond to SSBs on multiple BWPs. The random access resource used by the RedCap terminal is to be mapped with which SSB on the BWP is a problem that needs further optimization and research.

Embodiments of the present disclosure provide a random access method. In the random access method, it is specified that the random access resource such as the PRACH and the CORESET on the second initial BWP has a mapping relationship with a SSB in the first initial DL BWP or a SSB in the second initial DL BWP.

In the embodiment of the present disclosure, for convenience of description, SSB information configured in the first initial BWP is referred to as first SSB information. Random access resource information configured in the first initial BWP is referred to as first random access resource information. SSB information configured in the second initial BWP is referred to as second SSB information. Random access resource information configured in the second initial BWP is referred to as second random access resource information.

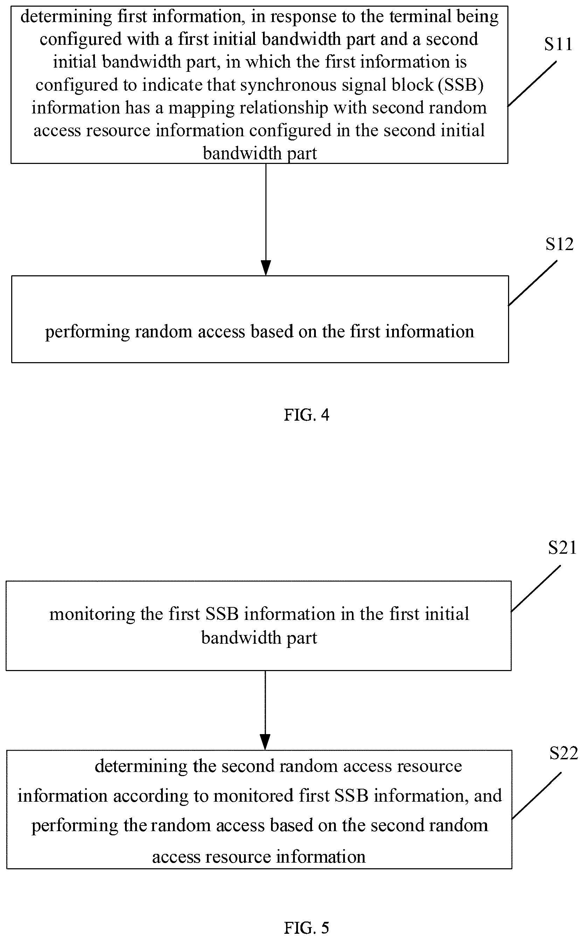

FIG. 4 is a flow chart showing a random access method according to an illustrative embodiment. As shown in FIG. 4, the random access method is applied to a terminal. The terminal may be understood as a RedCap terminal. The random access method includes steps as follows.

In step S11, first information is determined, in response to the terminal being configured with a first initial bandwidth part (BWP) and a second initial bandwidth part.

In an embodiment of the present disclosure, the first initial BWP is configured with first SSB information and first random access resource information, and the second initial BWP is configured with second SSB information and second random access resource information.

The first information is configured to indicate that synchronous signal block (SSB) information has a mapping relationship with second random access resource information configured in the second initial bandwidth part.

In step S12, random access is performed based on the first information.

In an embodiment of the present disclosure, the second random access resource information may have a mapping relationship with the first SSB information in the first initial BWP, and may also have a mapping relationship with the second SSB information in the second initial BWP. Alternatively, the second random access resource information may have a mapping relationship with the first SSB information in the first initial BWP, and have a mapping relationship with the second SSB information in the second initial BWP.

In an implementation, the second random access resource information has a mapping relationship with the first SSB information in the first initial BWP. The first SSB information may be configured in a first initial DL BWP. The terminal may monitor the first SSB information in the first initial DL BWP, and determine the second random access resource according to monitored first SSB information.

FIG. 5 is a flow chart showing a random access method according to an illustrative embodiment. As shown in FIG. 5, the random access method is applied to a terminal and includes steps as follows.

In step S21, the first SSB information is monitored in the first initial BWP.

In step S22, the second random access resource information is determined according to monitored first SSB information, and the random access is performed based on the second random access resource information.

In an implementation, in an embodiment of the present disclosure, the second random access resource information includes a PRACH resource set configured for the RedCap terminal, which is referred to as a second PRACH resource set hereinafter. That is, the RedCap terminal may map a PRACH resource configured for the RedCap terminal with the first SSB information on the first initial DL BWP.

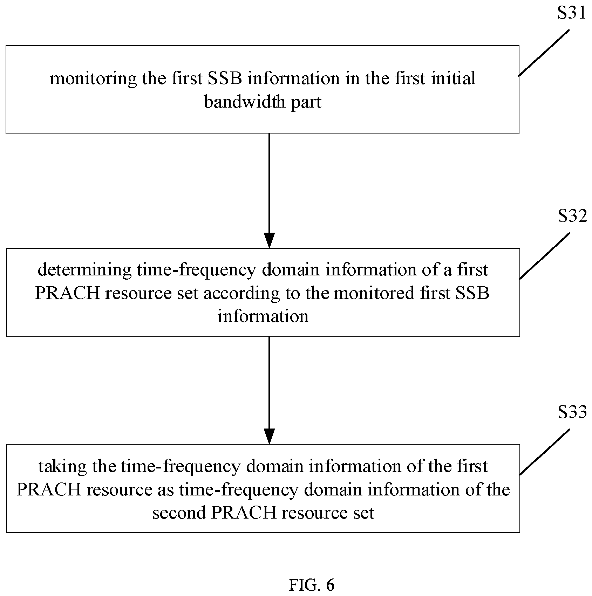

FIG. 6 is a flow chart showing a random access method according to an illustrative embodiment. As shown in FIG. 6, the random access method is applied to a terminal and includes steps as follows.

In step S31, the first SSB information is monitored in the first initial BWP.

In step S32, time-frequency domain information of a first PRACH resource set is determined according to the monitored first SSB information.

In step S33, the time-frequency domain information of the first PRACH resource is taken as time-frequency domain information of the second PRACH resource set.

In an implementation, in an embodiment of the present disclosure, the second random access resource information includes a conmmon CORESET, which is referred to as a second conmmon CORESET hereinafter. The first information is configured to indicate that the second conmmon CORESET in the second random access resource has a mapping relationship with the first SSB information. The second conmmon CORESET monitored by the RedCap terminal on a second initial DL BWP may have same spatial beam information as a first SSB determined on the first initial DL BWP, for example, a same QCL.

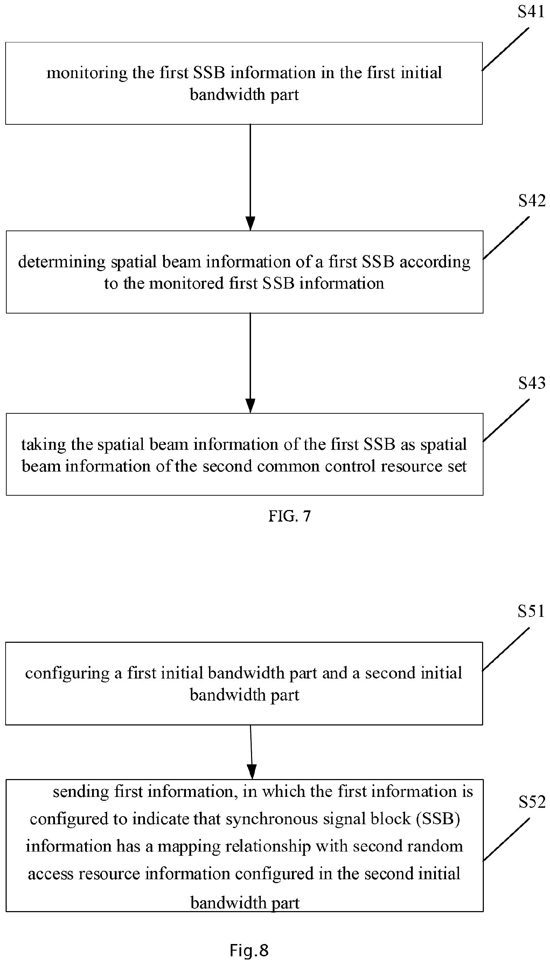

FIG. 7 is a flow chart showing a random access method according to an illustrative embodiment. As shown in FIG. 7, the random access method is applied to a terminal and includes steps as follows.

In step S41, the first SSB information is monitored in the first initial BWP.

In step S42, spatial beam information of a first SSB is determined according to the monitored first SSB information.

In step S43, the spatial beam information of the first SSB is taken as spatial beam information of the second common control resource set.

In an embodiment of the present disclosure, the second PRACH resource set configured for the RedCap terminal is mapped with the first SSB on the first initial DL BWP, and/or the second conmmon CORESET monitored on the second initial DL BWP is configured to have the same spatial beam information as the first SSB determined on the first initial DL BWP, which may reduce an access latency of the terminal, and the terminal may perform the random access after reading a corresponding configuration on the first initial DL BWP.

In an example, the second PRACH resource set configured for the RedCap terminal is mapped with the first SSB on the first initial DL BWP, and at the same time, the conmmon CORESET monitored on the second initial DL BWP has the same QCL as the SSB determined on the first initial DL BWP. When performing the random access, the RedCap terminal may determine the random access resource information on the second initial DL BWP in the following ways.

The RedCap terminal may acquire the SSB information (first SSB information) on the first initial DL BWP on the first initial DL BWP, and determine the second initial UL BWP and/or a PRACH configuration on the second initial UL BWP according to a SIB1 configuration on the first initial DL BWP or other preset rules. Then, an available second PRACH resource set is determined, according to the SSB information monitored on the first initial DL BWP (including the number of SSBs in an entire SSB burst, and an index of a SSB currently monitored by the terminal). The available second PRACH resource set may be multiple PRACH resource sets, and there is a mapping relationship between multiple second PRACH resource sets and multiple first SSBs. The RedCap terminal may determine the first SSB that meeting the random access based on measurement results, and perform the random access based on the second PRACH resource set mapped by the first SSB.

Further, the RedCap terminal acquires a configuration of the common CORESET on the second initial DL BWP, and may further determine QCL information of the common CORESET according to SSB information acquired on the first initial DL BWP, that is, the terminal receives the common CORESET on the second initial DL BWP by using same QCL information as a SSB on monitored first initial DL BWP. Furthermore, in the embodiment of the present disclosure, a time domain position of the common CORESET on the second initial DL BWP may be further determined according to a time domain position of the first SSB on the monitored first initial DL BWP.

In the embodiment of the present disclosure, the PRACH resource on the second initial DL BWP is mapped with the first SSB information on the first initial DL BWP, and at the same time, the conmmon CORESET monitored on the second initial DL BWP has the same QCL as the first SSB information determined on the first initial DL BWP, so that the terminal may perform the random access after reading the corresponding configuration on the first initial DL BWP, which may reduce the access latency of the terminal. However, when the terminal in a connected state needs to perform the random access, it needs to perform a BWP handover at this time, and switch to the first initial DL BWP to measure a corresponding SSB resource, so as to determine the random access resource on the second initial DL BWP.

In an implementation of the embodiment of the present disclosure, the second random access resource information may have the mapping relationship with the first SSB information in the first initial BWP, and have the mapping relationship with the second SSB information in the second initial BWP. For example, the second conmmon CORESET may have a mapping relationship with the first SSB information, but the second PRACH resource set is not mapped with the first SSB on the first initial DL BWP, but is mapped with a second SSB on the second initial DL BWP. That is, the first information is configured to indicate that the second conmmon CORESET has a mapping relationship with the first SSB information, and the second PRACH resource set in the second random access resource has a mapping relationship with the second SSB information.

In another implementation of the embodiment of the present disclosure, the second random access resource information has a mapping relationship with the second SSB information. For example, the second PRACH resource set configured for the RedCap terminal is mapped with the second SSB on the second initial DL BWP, and at the same time, the second conmmon CORESET monitored on the second initial DL BWP has the same spatial beam information as the second SSB determined on the second initial DL BWP, for example, the same QCL.

In the embodiment of the present disclosure, in order to reduce the time for the terminal to monitor the second SSB on the second initial DL BWP, a monitoring condition of the second SSB may be set. When it is determined that the monitoring condition for monitoring the second SSB is met, the second SSB information may be monitored. The second random access resource information may be determined according to monitored second SSB information, and the random access is performed based on the second random access resource information.

The monitoring condition of the second SSB includes at least one of a time condition for monitoring the second SSB information, a mapping relationship condition between a first SSB and the second SSB.

In an embodiment of the present disclosure, the monitoring condition of the second SSB may be determined in a predefined way, or may be determined based on a notification message carried in the first SSB information. The notification message is configured to indicate the monitoring condition of the second SSB.

In an example, a mapping relationship between a SSB on the second initial DL BWP and a SSB on the first initial DL BWP is predefined, and the terminal may narrow down or directly determine the second SSB to be monitored according to a preset relationship.

In case that the second random access resource information has a mapping relationship with the second SSB information, the terminal may determine the second SSB information on the second initial DL BWP, and the mapping relationship between the second SSB information and the PRACH on the second initial UL BWP, and/or the mapping relationship between the second SSB information and the common CORESET on the second initial DL BWP.

Before random access, the terminal also needs to measure the SSB on the second initial DL BWP to determine the second SSB that meets the condition, and then select the second PRACH resource set corresponding to the second SSB that meets the condition according to the mapping relationship. The terminal receives the common CORESET according to the second SSB determined in the second initial DL BWP, including determining received QCL and receiving time according to the second SSB.

Based on the above embodiments, in the random access method provided in the embodiment of the present disclosure, it is specified that the random access resource (common CORESET and PRACH) on the second initial BWP is mapped with the SSB on the first initial DL BWP. Alternatively, the random access resource (common CORESET and PRACH) on the second initial BWP is mapped with the SSB on the second initial DL BWP. Therefore, when performing the random access, a random access resource corresponding to when performing the random access on the second initial BWP may be directly determined, and communication efficiency may be improved.

Based on the same concept, embodiments of the present disclosure also provide a random access method, which is applied to a network device.

FIG. 8 is a flow chart showing a random access method according to an illustrative embodiment. As shown in FIG. 8, the random access method is applied to a network device and includes steps as follows.

In step S51, a first initial bandwidth part (BWP) and a second initial bandwidth part are configured.

The first initial BWP is configured with first SSB information and first random access resource information, and the second initial BWP is configured with second SSB information and second random access resource information.

In step S52, first information is sent. The first information is configured to indicate that synchronous signal block (SSB) information has a mapping relationship with second random access resource information configured in the second initial bandwidth part.

In an implementation, the first information is configured to indicate that the second random access resource information has a mapping relationship with the first SSB information.

On the one hand, the first information is configured to indicate that the second common control resource set in the second random access resource has a mapping relationship with the first SSB information. On the other hand, the first information is configured to indicate that a second physical random access channel (PRACH) resource set in a second random access resource has a mapping relationship with the first SSB information. Alternatively, the first information is configured to indicate that a second physical random access channel (PRACH) resource set in a second random access resource has a mapping relationship with the second SSB information.

In another implementation, the first information is configured to indicate that the second random access resource information has a mapping relationship with second SSB information.

In an embodiment of the present disclosure, in case that the first information is configured to indicate that the second random access resource information has the mapping relationship with the second SSB information, a notification message is carried in the first SSB information. The notification message is configured to indicate a monitoring condition for monitoring a second SSB.

In an implementation, the monitoring condition includes at least one of a time condition for monitoring the second SSB information, a mapping relationship condition between a first SSB and the second SSB.

Based on the above embodiments, in the random access method provided in the embodiment of the present disclosure, it is specified that the random access resource (common CORESET and PRACH) on the second initial BWP is mapped with the SSB on the first initial DL BWP. Alternatively, the random access resource (common CORESET and PRACH) on the second initial BWP is mapped with the SSB on the second initial DL BWP. Therefore, when performing the random access, a random access resource corresponding to when performing the random access on the second initial BWP may be directly determined, and communication efficiency may be improved.

It may be understood that the random access method provided in the embodiment of the present disclosure is also applicable to a process of implementing random access through an interaction between a terminal and a network device. For the process of implementing the random access through the interaction between the terminal and the network device, the terminal and the network device each have functions involved in the above-mentioned embodiments. For details, reference may be made to the relevant descriptions of the above-mentioned embodiments, which will not be elaborated herein.

It is to be noted that those skilled in the art may understand that the above-mentioned various implementations/embodiments in the embodiments of the present disclosure may be used in combination with the above-mentioned embodiments, or may be used alone. Whether it is used alone or in combination with the above-mentioned embodiments, the implementation principle is similar. In the embodiments of the present disclosure, some embodiments are illustrated in combination with the implementation. Of course, those skilled in the art may understand that such illustration is not a limitation of the embodiments of the present disclosure.

Based on the same concept, embodiments of the present disclosure also provide a random access apparatus.

It may be understood that, in order to realize the above-mentioned functions, the random access apparatus provided in the embodiment of the present disclosure includes corresponding hardware structures and/or software modules for executing various functions. Combining with units and algorithm steps of various examples disclosed in the embodiments of the present disclosure, the embodiments of the present disclosure may be implemented in a form of hardware or a combination of hardware and computer software. Whether a function is executed by hardware or computer software driving hardware depends on the specific application and design constraints of the technical solution. Those skilled in the art may use different methods to implement the described functions for each specific application, but such implementation should not be considered beyond the scope of the technical solutions of the embodiments of the present disclosure.

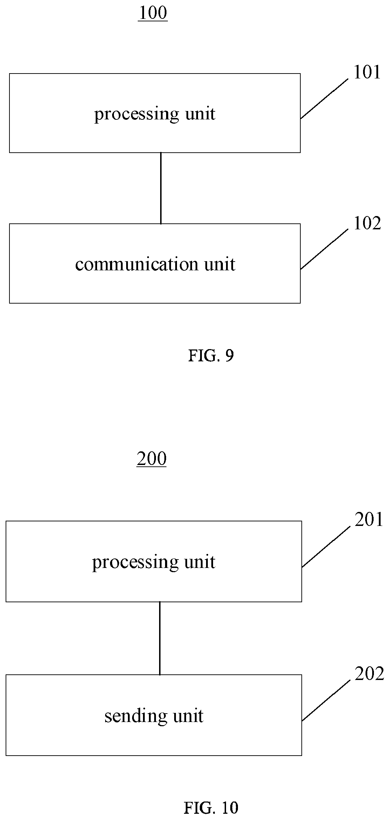

FIG. 9 is a block diagram showing a random access apparatus according to an illustrative embodiment. Referring to FIG. 9, a random access apparatus 100 is applied to a terminal. The random access apparatus 100 includes a processing unit 101 and a communication unit 102.

The processing unit 101 is configured to determine first information, in response to determining that the terminal is configured with a first initial bandwidth part (BWP) and a second initial bandwidth part (BWP). The first information is configured to indicate that synchronous signal block (SSB) information has a mapping relationship with second random access resource information configured in the second initial BWP. The communication unit 102 is configured to perform random access based on the first information.

In an implementation, the first information is configured to indicate that the second random access resource information has a mapping relationship with first SSB information. The first SSB information is SSB information configured in the first initial bandwidth part. The communication unit 102 monitors the first SSB information in the first initial BWP, determines the second random access resource information according to monitored first SSB information, and performs the random access based on the second random access resource information.

In an implementation, the first information is configured to indicate that a second common control resource set in a second random access resource has a mapping relationship with the first SSB information. The communication unit 102 determines spatial beam information of a first SSB according to the monitored first SSB information. The spatial beam information of the first SSB is taken as spatial beam information of the second common control resource set.

In an implementation, the first information is configured to indicate that a second physical random access channel (PRACH) resource set in a second random access resource has a mapping relationship with the first SSB information. The communication unit 102 determines time-frequency domain information of a first PRACH resource set according to the monitored first SSB information. The time-frequency domain information of the first PRACH resource is taken as time-frequency domain information of the second PRACH resource set.

In an implementation, the first information is configured to indicate that a second common control resource set in a second random access resource has a mapping relationship with first SSB information, and a second physical random access channel (PRACH) resource set in the second random access resource has a mapping relationship with second SSB information. The first SSB information is SSB information configured in the first initial bandwidth part, and the second SSB information is SSB information configured in the second initial bandwidth part.

In an implementation, the first information is configured to indicate that the second random access resource information has a mapping relationship with second SSB information, and the second SSB information is SSB information configured in the second initial bandwidth part. The communication unit 102 monitors the second SSB information, in response to meeting a monitoring condition for monitoring a second SSB, determines the second random access resource information according to monitored second SSB information, and performs the random access based on the second random access resource information.

In an implementation, the monitoring condition includes at least one of a time condition for monitoring the second SSB information, a mapping relationship condition between a first SSB and the second SSB.

In an implementation, the monitoring condition is determined in one or a combination of the following ways: determining in a predefined way, determining based on a notification message carried in the first SSB information. The notification message is configured to indicate the monitoring condition.

FIG. 10 is a block diagram showing a random access apparatus according to an illustrative embodiment. Referring to FIG. 10, a random access apparatus 200 is applied to a network device. The random access apparatus 200 includes a processing unit 201 and a sending unit 202.

The processing unit 201 is configured to configure a first initial bandwidth part and a second initial bandwidth part. The sending unit 202 is configured to send first information. The first information is configured to indicate that synchronous signal block (SSB) information has a mapping relationship with second random access resource information configured in the second initial BWP.

In an implementation, the first information is configured to indicate that the second random access resource information has a mapping relationship with first SSB information. The first SSB information is SSB information configured in the first initial BWP.

In an implementation, the first information is configured to indicate that a second common control resource set in a second random access resource has a mapping relationship with the first SSB information.

In an implementation, the first information is configured to indicate that a second physical random access channel (PRACH) resource set in a second random access resource has a mapping relationship with the first SSB information.

In an implementation, the first information is configured to indicate that a second common control resource set in a second random access resource has a mapping relationship with first SSB information, and a second physical random access channel (PRACH) resource set in the second random access resource has a mapping relationship with second SSB information. The first SSB information is SSB information configured in the first initial BWP, and the second SSB information is SSB information configured in the second initial BWP.

In an implementation, the first information is configured to indicate that the second random access resource information has a mapping relationship with second SSB information, and the second SSB information is SSB information configured in the second initial BWP.

In an implementation, the sending unit 202 is further configured to carry a notification message in the first SSB information. The notification message is configured to indicate a monitoring condition for monitoring a second SSB.

In an implementation, the monitoring condition includes at least one of a time condition for monitoring the second SSB information, a mapping relationship condition between a first SSB and the second SSB.

Regarding the apparatus in the above-mentioned embodiment, the specific manner in which each module performs operations has been described in detail in the embodiment of the method, which will not be elaborated herein.

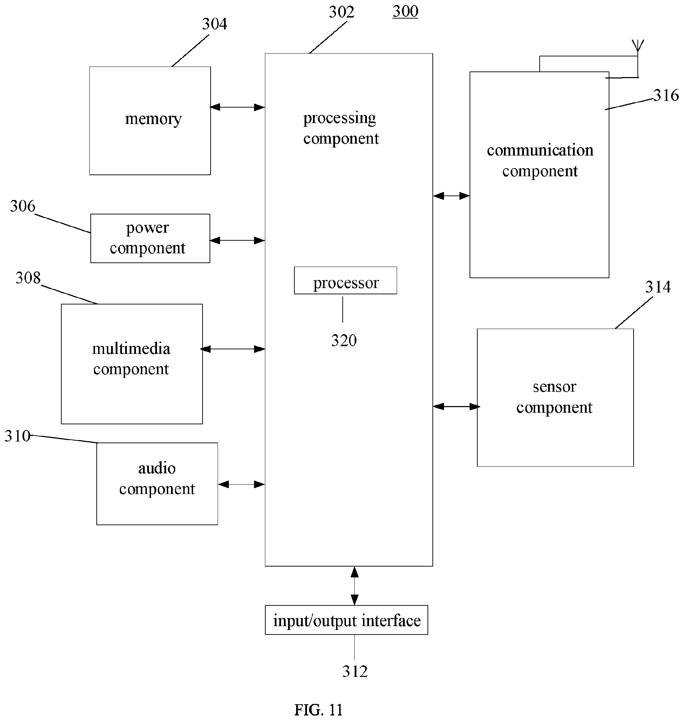

FIG. 11 is a block diagram showing a device for random access according to an illustrative embodiment. For example, the device 300 can be a mobile phone, a computer, a digital broadcast terminal, a messaging device, a game console, a tablet device, a medical device, a fitness device, a personal digital assistant, or the like.

Referring to FIG. 11, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 can include one or more of processors 320 to execute instructions to perform all or some of the steps in the above-described methods. Moreover, the processing component 302 may include one or more of modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more of power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more of touch sensors to sense touches, swipes, and gestures on the touch panel. The touch sensors may not only sense a boundary of a touch or swipe action, but also sense a duration and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more of sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 can access a wireless network based on a communication standard, such as WiFi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an illustrative embodiment, the device 300 may be implemented with one or more of application specific integrated circuits (ASICs), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 304, executable by the processor 320 in the device 300, for completing the above-mentioned method. For example, the non-transitory computer-readable storage medium may be a ROM, a random access memory (RAM), a CD-ROM, a magnetic tape, a floppy disc, an optical data storage device, and the like.

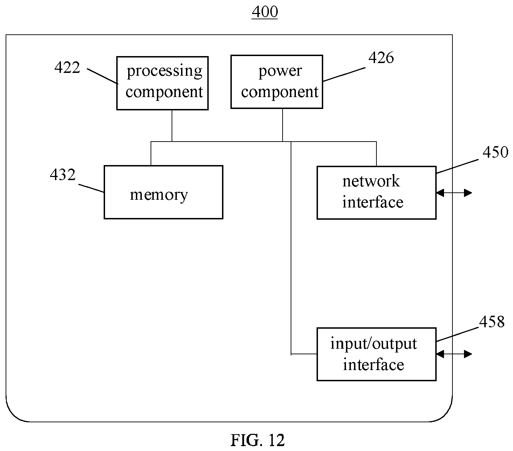

FIG. 12 is a block diagram showing a device 400 for random access according to an illustrative embodiment. For example, the device 400 may be provided as a server. Referring to FIG. 12, the device 400 includes a processing component 422, which further includes one or more of processors, and memory resources represented by a memory 432 for storing instructions executable by the processing component 422, such as an application program. The application program stored in the memory 432 may include one or more modules each corresponding to a set of instructions. In addition, the processing component 422 is configured to execute instructions to perform the above-mentioned method.

The device 400 may further include a power component 426 configured to perform power management of the device 400, a wired or wireless network interface 450 configured to connect the device 400 to a network, and an input/output (I/O) interface 458. The device 400 may operate based on an operating system stored in the memory 432, such as Windows Server^{™}, Mac OS X^{™}, Unix^{™}, Linux^{™}, FreeBSD^{™}, or the like.

In an illustrative embodiment, the device 400 may be implemented with one or more of application specific integrated circuits (ASICs), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 432, executable by the processor 422 in the device 400, for completing the above-mentioned method. For example, the non-transitory computer-readable storage medium may be a ROM, a random access memory (RAM), a CD-ROM, a magnetic tape, a floppy disc, an optical data storage device, and the like.

It is further understood that "a plurality" in the present disclosure refers to two or more, and other quantifiers are similar thereto. "And/or," which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that terms such as "first," and "second" are used to describe various information, these information should not be limited by these terms. These terms are only used for distinguishing information of the same type from each other and do not denote a particular order or degree of importance. As a matter of fact, the terms such as "first," and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the scope of the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the scope of the appended claims.

## Claims

1. A random access method, applied to a terminal, comprising:
determining first information, in response to the terminal being configured with a first initial bandwidth part and a second initial bandwidth part; wherein the first information is configured to indicate that synchronous signal block (SSB) information has a mapping relationship with second random access resource information configured in the second initial bandwidth part; and
performing random access based on the first information.

2. The random access method of claim 1, wherein the first information is configured to indicate that the second random access resource information has a mapping relationship with first SSB information, and the first SSB information is SSB information configured in the first initial bandwidth part;
wherein performing the random access based on the first information comprises:
monitoring the first SSB information in the first initial bandwidth part, determining the second random access resource information according to monitored first SSB information, and performing the random access based on the second random access resource information.

3. The random access method of claim 2, wherein the first information is configured to indicate that a second common control resource set in a second random access resource has a mapping relationship with the first SSB information;
wherein determining the second random access resource information according to the monitored first SSB information comprises:
determining spatial beam information of a first SSB according to the monitored first SSB information; and
taking the spatial beam information of the first SSB as spatial beam information of the second common control resource set.

4. The random access method of claim 2 or 3, wherein the first information is configured to indicate that a second physical random access channel (PRACH) resource set in a second random access resource has a mapping relationship with the first SSB information;
wherein determining the second random access resource information according to the monitored first SSB information comprises:
determining time-frequency domain information of a first PRACH resource set according to the monitored first SSB information; and
taking the time-frequency domain information of the first PRACH resource as time-frequency domain information of the second PRACH resource set.

5. The random access method of claim 1, wherein the first information is configured to indicate that a second common control resource set in a second random access resource has a mapping relationship with first SSB information, and a second physical random access channel (PRACH) resource set in the second random access resource has a mapping relationship with second SSB information;
wherein the first SSB information is SSB information configured in the first initial bandwidth part, and the second SSB information is SSB information configured in the second initial bandwidth part.

6. The random access method of claim 1, wherein the first information is configured to indicate that the second random access resource information has a mapping relationship with second SSB information, and the second SSB information is SSB information configured in the second initial bandwidth part;
wherein performing the random access based on the first information comprises:
monitoring the second SSB information, in response to meeting a monitoring condition for monitoring a second SSB, determining the second random access resource information according to monitored second SSB information, and performing the random access based on the second random access resource information.

7. The random access method of claim 6, wherein the monitoring condition comprises at least one of:
a time condition for monitoring the second SSB information;
a mapping relationship condition between a first SSB and the second SSB.

8. The random access method of claim 6 or 7, wherein the monitoring condition is determined in one or a combination of the following ways:
determining in a predefined way;
determining based on a notification message carried in the first SSB information, wherein the notification message is configured to indicate the monitoring condition.

9. A random access method, applied to a network device, comprising:
configuring a first initial bandwidth part and a second initial bandwidth part; and
sending first information, wherein the first information is configured to indicate that synchronous signal block (SSB) information has a mapping relationship with second random access resource information configured in the second initial bandwidth part.

10. The random access method of claim 9, wherein the first information is configured to indicate that the second random access resource information has a mapping relationship with first SSB information, and the first SSB information is SSB information configured in the first initial bandwidth part.

11. The random access method of claim 10, wherein the first information is configured to indicate that a second common control resource set in a second random access resource has a mapping relationship with the first SSB information.

12. The random access method of claim 10 or 11, wherein the first information is configured to indicate that a second physical random access channel (PRACH) resource set in a second random access resource has a mapping relationship with the first SSB information.

13. The random access method of claim 9, wherein the first information is configured to indicate that a second common control resource set in a second random access resource has a mapping relationship with first SSB information, and a second physical random access channel (PRACH) resource set in the second random access resource has a mapping relationship with second SSB information;
wherein the first SSB information is SSB information configured in the first initial bandwidth part, and the second SSB information is SSB information configured in the second initial bandwidth part.

14. The random access method of claim 9, wherein the first information is configured to indicate that the second random access resource information has a mapping relationship with second SSB information, and the second SSB information is SSB information configured in the second initial bandwidth part.

15. The random access method of claim 14, further comprising:
carrying a notification message in the first SSB information, wherein the notification message is configured to indicate a monitoring condition for monitoring a second SSB.

16. The random access method of claim 15, wherein the monitoring condition comprises at least one of:
a time condition for monitoring the second SSB information;
a mapping relationship condition between a first SSB and the second SSB.

17. A random access apparatus, applied to a terminal, comprising:
a processing unit configured to determine first information, in response to determining that the terminal is configured with a first initial bandwidth part and a second initial bandwidth part, wherein the first information is configured to indicate that synchronous signal block (SSB) information has a mapping relationship with second random access resource information configured in the second initial bandwidth part; and
a communication unit configured to perform random access based on the first information.

18. A random access apparatus, applied to a network device, comprising:
a processing unit configured to configure a first initial bandwidth part and a second initial bandwidth part; and
a sending unit configured to send first information, wherein the first information is configured to indicate that synchronous signal block (SSB) information has a mapping relationship with second random access resource information configured in the second initial bandwidth part.

19. A random access device, comprising:
a processor; and
a memory for storing instructions executable by the processor;
wherein the processor is configured to perform the random access method of any one of claims 1 to 8.

20. A random access device, comprising:
a processor; and
a memory for storing instructions executable by the processor;
wherein the processor is configured to perform the random access method of any one of claims 9 to 16.

21. A storage medium having stored therein instructions that, when executed by a processor of a terminal, cause the terminal to perform the random access method of any one of claims 1 to 8.

22. A storage medium having stored therein instructions that, when executed by a processor of a terminal, cause the terminal to perform the random access method of any one of claims 9 to 16.
